# EUROPEAN PATENT SPECIFICATION

(11) **EP 2 446 656 B1**
(45) Date of publication and mention of the grant of the patent: **25.06.2014**
(21) Application number: 09779908.4
(22) Date of filing: 23.06.2009
(51) Int. Cl.: H04W 24/00

(54) **MACRO/FEMTO BASE STATION MANAGEMENT SYSTEM, NETWORK ELEMENT, COMMUNICATION NETWORK, CORRESPONDING METHODS, PROGRAM ELEMENT AND COMPUTER-READABLE MEDIUM**
MACRO/FEMTO-BASISSTATIONSVERWALTUNGSSYSTEM, NETZELEMENT, KOMMUNIKATIONSNETZ, ENTSPRECHENDE VERFAHREN, PROGRAMMELEMENT UND COMPUTERLESBARES MEDIUM
SYSTÈME DE GESTION DE STATIONS DE BASE MACRO/FEMTO, ÉLÉMENT DE RÉSEAU, RÉSEAU DE COMMUNICATION, DES PROCÉDÉS CORRESPONDANTS, ÉLÉMENT DE PROGRAMME ET SUPPORT LISIBLE PAR ORDINATEUR

(43) Date of publication of application: 02.05.2012
(73) Proprietor: Nokia Solutions and Networks Oy, 02610 Espoo (FI)
(72) Inventor: ZHANG, Shun Liang, Beijing 100016 (CN); ZHANG, Yi, Beijing 100101 (CN); ZHOU, Wei Hua, Beijing 100081 (CN)
(74) Representative: Borgström, Markus
(86) International application number: PCT/EP2009/057841
(87) International publication number: WO 2010/149208

(56) References cited:
- US-A1- 2005 148 368
- US-A1- 2009 129 291
- "3rd Generation Partnership Project; Technical Specification Group Service and System Aspects; Telecommunication management; Study of Self-Organizing Networks (SON) related Operations, Administration and Maintenance (OAM) for Home Node B (HNB) (Release 9); TR 32.821" 3GPP TR 32.821 V9.0.0 (2009-06), [Online] 12 June 2009 (2009-06-12), pages 1-41, XP002572023 Retrieved from the Internet: URL:http://www.3gpp.org/ftp/specs/html-INF O/32821.htm> [retrieved on 2010-03-05]

## Description

### Field of Invention

The present invention relates to the field of network elements, in particular to base station management systems or base station in a mobile communication network. Furthermore, the invention relates to a mobile communication network, a method of communication management in a communication network, a program element, and a computer-readable medium.

### Art Background

In today's communication networks, in particular in mobile communication networks, the performance of the communication network is of great interest. One possible feature to increase the performance, e.g. the transmission or sending resources, of the communication may be the use of so-called femto base stations in order to unburden the macro base stations of the communication network. These femto base stations may form access points of the communication network. Possible examples for femto base stations may include each network element implemented in communication networks, e.g. may be a base station of a cordless telephone, computers having WLAN capability, or even mobile telephones of the communication network itself. However, in order to use these femto base stations efficiently a number of problems may arise. For example, according to a service provider working group (SPWG) requirement of the Re11.6 the handover (HO) between femto cell, i.e. a femto base station, and macro cell, i.e. a macro base station is an important feature. This HO has also be performed in the 3GPP R8 and R9 between macro (e)NB and H(e)NB.

Thus, there may be a need for a network element and a method of communication management in a communication network which may enable the provision of an efficient handover between a macro cell and a femto cell or between two femto cells.

US 2009/129291 A1 discloses a method to configure an access point based on acquired information. The access point may configure itself with assistance from a configuration server. For example, the access point may send information such as the location of the access point to a configuration server and the configuration server may respond with a list of neighbouring access points for that access point. A configuration server may provide configuration information to an access point based on the location of the access point.

### Summary of the Invention

This need may be met by a macro/femto base station management system, a network element, a mobile communication network, methods of communication management in a communication network, a program element, and a computer-readable medium according to the independent claims. Further embodiments of the present invention are described by the dependent claims.

According to a first exemplary aspect a macro/femto base station management system for a communication network comprising a plurality of network elements is provided, wherein the macro/femto base station management system comprises a receiving means to receive an activity signal indicating that a status of a specific network element has changed, a determination means to determine a neighbour signal of the specific network element indicative for the neighbourhood relationship of the specific network element, and a sending means to send the neighbour signal or a modified neighbour signal to at least one neighbouring network element of the specific network element.

In particular, the specific network element may be a femto/macro base station. The status of the specific network element may relate to the fact whether the specific network element is part of the communication network or not, e.g. indicate a registration of a new specific network element, e.g. a femto base station, or may indicate the shutdown of the specific network element. That is, the activity signal may indicate a registration of a new network element or the shutdown/deregistration of a registered network element.

According to a second exemplary aspect a network element for a communication network is provided, wherein the network element comprises a sending means to send an activity signal indicating that a status of a network element has changed, a receiving means to receive a neighbour signal from a macro/femto base station management system according to the first exemplary aspect, wherein the neighbour signal comprises a neighbour signal of a neighbouring network element indicative of a neighbourhood relationship of the neighbouring network element. In particular, the network element may be a femto base station of a communication network.

According to a third exemplary aspect a communication network is provided comprising a macro/femto base station management system according the first exemplary aspect and a network element according the second exemplary aspect.

According to a fourth exemplary aspect a method of communication management in a communication network is provided, wherein the method comprises receiving an activity signal indicating that a status of a specific network element has changed, determining a neighbour signal of the specific network element indicative for the neighbourhood relationship of the specific network element, and sending the neighbour signal or a modified neighbour signal to at least one neighbouring network element of the specific network element.

According to a fifth exemplary aspect a method of communication management in a communication network is provided, wherein the method comprises sending an activity signal indicating that a status of a network element has changed, receiving a neighbour signal from a macro/femto base station management system according to the first exemplary aspect, wherein the neighbour signal comprises a neighbour signal of a neighbouring network element indicative of a neighbourhood relationship of the neighbouring network element.

According to a sixth exemplary aspect a program element is provided, which, when being executed by a processor, is adapted to control or carry out a method according to the fourth or fifth exemplary aspect.

According to a seventh exemplary aspect a computer-readable medium is provided, in which a computer program is stored which, when being executed by a processor, is adapted to control or carry out a method according to the fourth or fifth exemplary aspect.

According to an exemplary aspect a computer-readable medium is provided, in which a computer program is stored which, when being executed by a processor, is adapted to control or carry out a method according to an exemplary aspect.

The term "neighbourhood relationship" may particularly denote information relating to neighbouring network elements, e.g. may relate to network elements being arranged in an area which is defined by a specific distance from the specific network element. For femto BS supported networks, femto BS specific character (CSG related attributes, such as CSG access mode, CSG ID) may also be considered during neighbourhood relationship determination. For example, the neighbouring relationship of the specific network element may be defined by a summary of all network elements arranged at a distance less than a predetermined threshold with respect to the specific network element.

By providing such a macro/femto base station management system and method of communication management it may be possible to enable a determination and distribution of neighbouring base station related capability info at a serving base station which may include a management system. In particular, the determination and sending of the neighbour or neighbouring signal may enable a dynamic informing of network elements about changes in the femto/macro cell of the serving base station, e.g. the registration/deregistration of network elements, e.g. femto base stations. Due to the possible dynamic character it may further be possible to use so-called plug and play femto base stations even in case of a great number of such femto base stations.

The method according to an exemplary aspect may enable the possibility that each femto/macro BS knows the potential neighbour list and their capability dynamically by using the neighbour signal, which may especially important to femto BS. In particular, the neighbour signal may include or may relate to a neighbour list which may assistant a femto/macro base station for more effective HO.

Furthermore, the method according to an exemplary aspect may greatly decrease the load of manual network element configuration. It may be used for both macro BS and femto cell BS though it may be more useful to Femto BS.

The method according to an exemplary aspect may be used for various femto networks, such as 3GPP/3GPP2 based femto networks, WiMAX based femto networks.

A gist of an exemplary embodiment may be seen in providing a neighbour signal by a management system or unit in a communication network which may include a number of different information relating to neighbouring relationship of a specific network element, e.g. a femto base station, i.e. containing information which may be used for further communications in the communication network.

Next, further exemplary embodiments of the macro/femto base station management system are described. However, these embodiments also apply to the mobile communication network, the method of communication management in a communication network, the program element, and the computer-readable medium.

According to another exemplary embodiment the macro/femto base station management system further comprises a storage unit adapted to store the neighbouring list, and related capability of the neighbour in the list. In particular, the specific network element may comprise a storage unit. Furthermore, the macro/femto base station management system may be adapted to re-determine neighbouring signals and/or neighbourhood relationship based on capability change reported or indicated by any other network element, e.g. the specific network element or other base stations, or based on a trigger from an O&M system.

By providing the macro/femto base station management system with a storage device, it may be possible that information may be stored, e.g. neighbouring lists, in the network element which may be used to determine which neighbouring network elements should be informed of a registration/deregistration of a network element. Furthermore, the storage device or storage unit may be used to dynamically update the information, e.g. the stored neighbouring list. That is, the network element, e.g. a femto/macro BS management system may dynamically change or update the stored neighbouring list, or the management system may send a signal to any other network element, e.g. the specific network element or other macro/femto base station in the communication network so that these other BS may dynamically update their respective neighbouring lists.

According to another exemplary embodiment of the macro/femto base station management system the activity signal comprises data indicative for the location of the specific network element. In particular, the activity signal may further comprise information relating to identify the specific network element, e.g. may relate to an ID, like a closed subscriber group (CSG) ID, or a access mode, like a CSG mode (CSG open, CSG closed, Open mode). Alternatively or additionally the activity signal may be indicative for the fact that the specific network element was not active for a predetermined time, e.g. no handover communication for a predetermined or certain time period. In this case the neighbour signal may be indicative or may trigger a removing of the specific network element from a neighbouring list. Such an activity signal may be send by any network element of the communication network, e.g. from a femto/macro BS or a mobile station (MS). Another activity signal may be indicative for the fact that a femto base station has received communication or has heard a new network element, e.g. the specific network element, which new network element may thus be reported to the femto/macro BS management system. In this case the resulting neighbour signal may be trigger an adding of the new network element in a neighbour list.

According to another exemplary embodiment of the macro/femto base station management system the neighbour signal includes list data indicative for a neighbouring list. In particular, the neighbour signal may further include topology data indicative for a topology of the communication network. For example, this topology data may be indicative for or indicate an overlap between a coverage of the specific network element, neighbouring network elements, and their capability info. Furthermore, the network element may be adapted to re-determine neighbouring signals and/or neighbourhood relationship based on capability change reported or indicated by any other network element, e.g. the specific network element or other base stations, or based on a trigger from an O&M system.

According to another exemplary embodiment of the macro/femto base station management system the neighbouring signal includes information relating to a handover policy.

According to another exemplary embodiment of the macro/femto base station management system the neighbouring signals includes information relating to one characteristic out of the group consisting of: characteristics of the specific network element, characteristics of at least one neighbouring network element, in particular whether the at least one network element is a macro base station or a femto base station, identification of the type of the specific network element, identification of the type of at least one neighbouring network element, indication of a closed subscriber group identification of the specific network element, indication of a closed subscriber group identification of at least one neighbouring network element, in particular in case the at least one network element is a femto base station, indication of a closed subscriber group service mode of at least one neighbouring network element, in particular of an open mode, a CSG open mode, or a CSG closed mode, and indication of a closed subscriber group membership of at least one neighbouring femto base station.

In the following some remarks concerning different modes will be made in particular concerning the wording in WiMAX (CSG service mode) and 3GPP (CSG access mode). In particular,
In WiMAX:
Open Model: The most simple service model for femtocells is the Open Model. In this case, admission control and QoS policy is the same as in the macrocellular network. Femtocell admission control and policy is administered the same way as a traditional WiMAX macrocellular base station.
CSG Closed: The CSG Closed service model is intended to allow the service provider to offer femtocells that provide private services to a specific subscriber and a limited subset of WiMAX users identified by the subscriber. From a service perspective this would be similar to that of a WiFi hotspot that is configured with a secret network key that is shared by the hotspot owner with a small group of individuals known by the owner. CSG Open: The CSG Open service model is similar to the CSG Closed model in that the service provider would identify the primary owner as the CSG account owner. The CSG account owner would be permitted to add a limited number of users to the CSG. However, in this case, the CSG users would not receive exclusive access to the femtocell services, rather they would receive *preferential* access and services from the femtocell.
In 3GPP:
In R8, there is closed access mode HNB/HeNB.
   - Closed CSG cells only allow the UEs of corresponding CSG subscribers to access. When a UE requests for access via a closed CSG cell, the network shall perform CSG access control for this UE.
      In R9, there are two additional access modes of HNB/HeNB, i.e. open access mode and hybrid access mode.
   - All UEs can access via an open cell. The network does not perform CSG access control for the UEs accessing open cells of HNB/HeNB.
   - Hybrid CSG cells allow all UEs to access. This is same as open cells or macro cells. If the network knows the access mode is hybrid, the network will not perform CSG access control for the UE.

According to another exemplary embodiment of the macro/femto base station management system the output interface is further adapted to send the neighbour signal to at least one network element of the neighbouring relationship of the specific network element. In particular, the neighbour signal or a modified neighbour signal may be sent to several or all neighbouring network elements, e.g. to all network elements defined in the neighbouring list, so that the neighbouring network elements may update their neighbour list by adding the newly registered specific network element or by removing the newly deregistered specific network element.

Summarizing an exemplary aspect may be seen in the fact that a dynamic topology and capability learning mechanism is provided which may comprise some or all of the following steps and/or features:
1) When a femto base station (BS) registers to the communication network, a femto/macro BS management system determines a potential neighbour list for the femto BS based on its location info and/or local maintained network topology info, and then provides the potential neighbouring femto/macro BS info list as part of configuration to the femto BS by a message, e.g. a neighbour signal. Neighbouring BS info list may be introduced as new parameters included in the message.
2) The new registered femto BS stores and maintains the neighbouring femto/macro BS info list provided by femto/macro BS management system for later use.
3) Based on the changed topology due to the new registered femto BS, the femto/macro BS management system sends or transmits the new femto BS and its related capability info to the potential neighbouring femto/macro BSs, which may be determined before, e.g. by a TR-069 message, and then the femto/macro BSs update their local maintained neighbour lists info by adding the new femto BS related info.
4) In case a femto BS is shutdown or powered off, the femto/macro BS management system indicates the disappearing of the femto BS to its potential neighbouring femto/macro BS, e.g. by checking the cached neighbour info of the femto BS, by a message, and the potential neighbouring femto/macro BS updates local maintained neighbour list by removing the deregistered Femto BS.
5) When a femto BS detects the neighbour relation or neighbour relationship change due to new neighbour BS reported from a mobile station (MS), or expired old neighbour BS, i.e. no handover related contact for certain or predetermined time period, it informs the changed neighbour info to the femto/macro BS management system, which may update the local cached neighbour relation info and informs the change to related femto/macro BS. It should be noted that the femto/macro BS management system may inform the new registered femto BS or old deregistered femto BS or other topology or capability change of one or more femto BS to other neighbour femto/macro BS on per femto BS basis or on predetermined time period basis to avoid too frequent message transaction.
6) The femto/macro BS management system may determine the potential neighbour relationship between femto/macro BSs based on the location info, and CSG attribute (CSG service mode, CSG ID) of the femto BS. For example, two CSG closed femto BS with different CSG ID cannot be neighbours though they are near in geography. It should be noted that the location info of a WiMAX femto access point (WFAP) may be indicated by various formats, such as the following examples:
   Detected macro BS or femto BS (WFAP) info, e.g. WFAP/BS ID,
   GPS based info, e.g. geographical coordinates,
   Fixed Internet connectivity information, e.g. IP address or port,
   Fixed CPE (host the Femto BS) location info contracted with operator.
7) The Femto/Macro BS management system may create and store the neighbour relation info for the new femto BS based on the neighbour determination result, and update the neighbour relation info of each femto/Macro BS dynamically for later use.
8) If the macro BS does not support the SON feature, the macro BS related info (such as location) may be statically configured on the femto BS management system or provided by O&M system.
9) A new set parameters to indicate the neighbour info list of a femto/macro BS may be introduced in the data model used between the femto/macro BS management system and femto/macro BS. Several sub-parameters may be used as neighbour info:
   a parameter to indicate the BS type (femto cell BS or macro cell BS),
   a parameter to indicate the CSG ID of a Femto BS,
   a parameter to indicate the CSG service Mode (Open, CSG Open, CSG closed) of the neighbour Femto BS,
   a parameter to indicate the CSG membership of the neighbour Femto BS.
10) A new parameter to indicate the HO policy, e.g. defining HO between femto/macro BS, of a femto/macro BS is introduced in the data model used between the femto/macro BS management system and femto/macro BS.

In the following some possible parameters which may be suitable to enable a dynamic topology and capability learning by the aforementioned process are enumerated. In particular, in some exemplary aspects the following parameters may be included in the neighbour signals or messages involved in the network topology and capability learning process:
1) BS/WFAP ID
2) HO policy about HO between femto/macro BS of the femto/macro BS. It should be noted that the HO policy may denote enabling/disabling or setting preference for various types of HO between macro cell and femto cell or between femto cells.
3) BS type (to indicate whether it is a femto cell BS or a macro cell BS.
4) Location info of the femto/macro BS which may be GPS based or fixed access network (DSL) based or detected macro BS ID/Micro BS ID.
5) The CSG service mode/ CSG access mode, e.g. open, CSG closed, CSG open, in WiMAX or open access mode, closed access mode, hybrid access mode in 3GPP, of the femto BS.
6) The CSG ID of the femto BS.
7) CSG membership (UE1, UE2, ...) of the femto BS in case the CSG service mode is CSG close, or CSG Open.
8) Other femto BS related capability info, e.g. load, supported maximum MS numbers or current serving MS numbers.

In particular, a method according to an exemplary aspect may be used in the context of 3GPP (RAN3, SA5) Re19.0 and/or WMF NWG (Femtocell, SON) Rel1.6 spec on Femto cell and/or SON WI. Such a method may support HO between femto cell and macro cell by defining how WFAP/BS receives network topology info (neighbour BS/WFAP related info) before initiated a HO), for example. Network topology may be especially important to femto cell scenario due to plug&play character and large number of the WFAP (Femto BS). In particular, the network topology may define which neighbour BS may be a potential target BS.

Furthermore, a method according to an exemplary aspect may be suitable to resolve some of the requirements in the WMF/SPWG Femto System Requirements V0[l].99.doc. Possible requirements may be
R-[15] A WiMAX Femtocell MAY support handover between adjacent WFAPs assuming coverage overlap between such WiMAX Femtocell and MS's access right to both WFAP's.
R-[16] A WiMAX Network supporting WiMAX Femtocells SHALL support handover between WFAPs and the WiMAX Macro Network within the same NAP.
R-[17] A WiMAX network supporting femtocells SHOULD support handover between Femto Access Points and a WiMAX Macro Network residing in a different NAP.
R-[18] The operator SHALL be able to provision, e.g. enable/disable or set preference, for the following types of handovers that are allowed on a per subscriber basis:
   Macro network to femto cell
   Femto cell to macro network
   Femto cell to femto cell (if supported)

It should be noted that for femto/macro base stations of a communication network which do not support a macro/femto base station management system the respective topology info about macro BS may be statically configured or informed by O&M system, while for femto BSs the management system may learn the topology info during the femto BS registration/deregistration process. The capability info of femto BSs may be informed or distributed by O&M system or other network elements outside of the communication network.

Furthermore, a method according to an exemplary aspect may also be suitable to meet some requirement specification of 3GPP, e.g. it may be possible to support service continuity when user equipment moves from a non-CSG cell to a CSG cell, and/or it may be possible to support service continuity when UE moves from a CSG cell to a non-CSG cell or another CSG cell. A possible HO may be either network initiated or may be initiated by the macro base station (MS).

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered to be disclosed within this application.

The aspects and exemplary embodiments defined above and further aspects of the invention are apparent from the example of embodiment to be described hereinafter and are explained with reference to these examples of embodiment.

### Brief Description of the Drawings

Fig. 1 schematically shows a communication network.
Fig. 2 schematically shows the process of a femto base station registration.
Fig. 3 schematically shows a process of updating upon a deregistration.
Fig. 4 schematically shows a process of an update upon a capability change.

### Detailed Description

The illustration in the drawings is schematic. It is noted that in different figures, similar or identical elements are provided with the similar or identical reference signs.

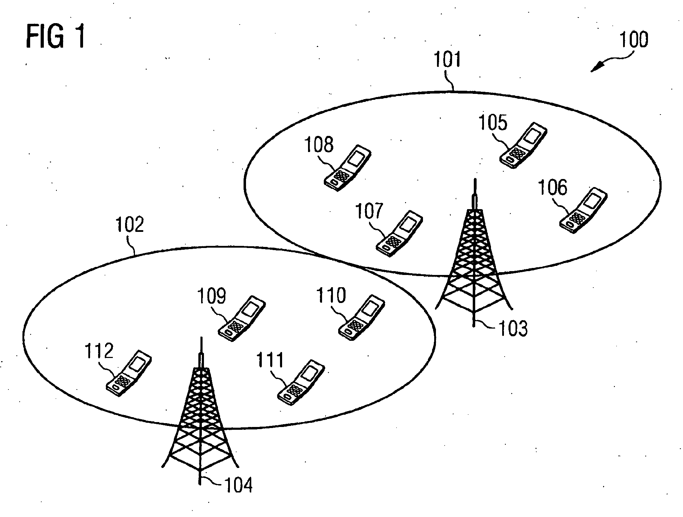

With reference to Fig. 1 a communication network 100 will be described. The communication network may be a cellular mobile communication network.

The communication network 100 comprises two cells 101 and 102 each comprising a corresponding macro base station 103 and 104, respectively. Furthermore, a plurality of network elements or femto base stations 105, 106, 107, 108, 109, 110, 111, 112, and 113 are schematically depicted in Fig. 1. However, the communication network may of course comprise a much higher number of macro base stations and network elements, which may be formed by mobile phones, computers, PDA base stations of cordless telephones or the like, i.e. every communication system which is suitable for a wireless communication. Each of the plurality of network elements may define a single femto cell, i.e. may function as a femto base station as well. It should be noted that although the network elements are depicted as schematically mobile stations, the femto base station may be implemented in any suitable form. Some or all macro base stations 103 and 104 of the communication network may be suitable as or may include femto/macro base station management systems (an example is HMS,H(e)NB management system defined by 3GPP). Alternatively, special network elements may be provided as the femto/macro base station management systems.

Each of the femto/macro base station management systems comprises an input interface adapted to receive an activity signal, a determination unit adapted to determine a neighbour signal of the specific network element, and an output interface adapted to send the neighbour signal to network elements of the communication system.

The input/output interface and the determination unit may be formed by suitable hardware or software and are not shown in Fig. 1 for clarity reasons.

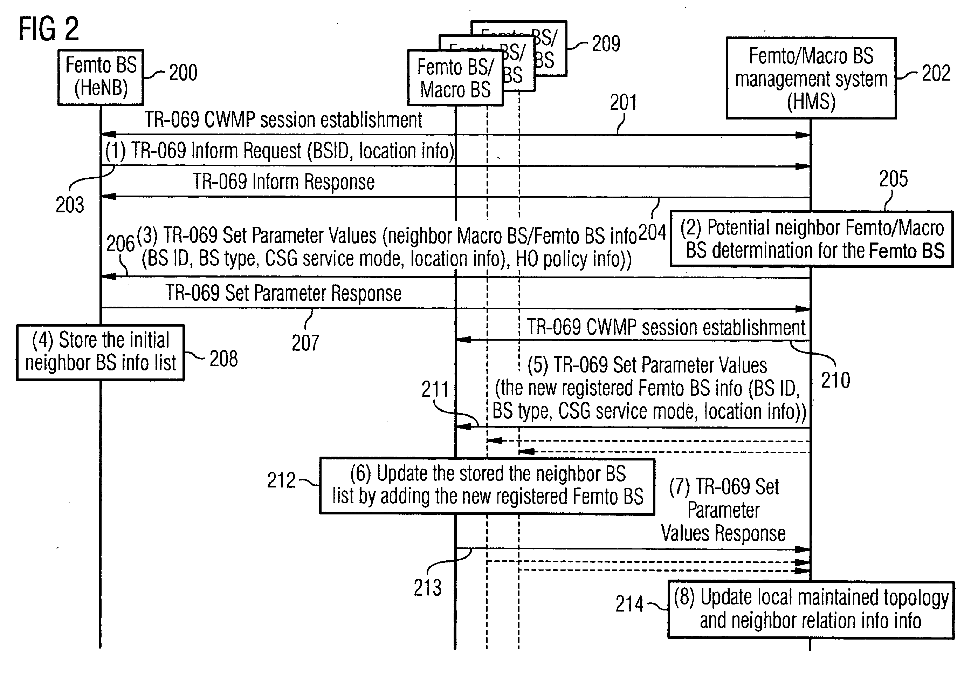

Fig. 2 schematically shows the process of a femto base station (BS) 200 registration.

### STEP 1

Initially a TR-069 CWMP session establishment message is exchanged 201 between the femto BS 200 and a femto/macro BS management system (HMS) 202, which is followed by a TR-069 inform request message 203 which is sent to the femto/macro BS management system by the femto BS. The message may include the location info and/or BS ID parameters. The inform request message may be followed by a TR-069 inform response message 204 which is sent from the HMS to the femto BS.

### STEP 2

The femto/macro BS management system determines the potential neighbour femto/macro BSs for the newly registered femto BS 205 based on the location info of the femto BS, and femto BS attribute info (BS type, CSG ID, CSG service mode (CSG-Closed, CSG-Open, Open)) of the femto BS, and known network topology info about other femto/macro BSs. It should be noted that in case the macro BS does not support the so-called SON feature, then macro BSs related info (such as location info) may be statically configured on the femto/macro BS management system or provided by O&M system.

### STEP 3

The femto/macro BS management system 202 prepares for local access information, in particular it sends a neighbour signal 206 which may include a determined neighbour BS info (BS type, CSG ID, CSG service mode) list, HO policy on HO between femto/macro BS, and sets the values on the femto BS using the neighbour signal, e.g. a set parameter values message. Neighbour BS info list may be introduced as new parameters of the message. The set parameter values message may be followed by a TR-069 set parameter response message 207 sent by the femto BS.

### STEP 4

The femto BS knows the potential neighbour femto/macro BSs around it based on the informed neighbor femto/macro BS info list, and may store 208 the neighbour femto/macro BSs related info for later use.

### STEP 5

In case of another TR-069 CWMP session establishment 209 between the HMS 202 and a further femto/macro BS 210 the neighbour list stored in the HMS may be used. Based on the potential neighbour femto/macro BS selected out before, the femto/macro BS management system sends a TR-069 message (Set Parameter Values) 211 to the related neighbour femto/macro BS to inform the appearing of the new registered femto BS and its related info (BS type, CSG ID, CSG service mode, location info).

### STEP 6

The further or neighbour femto/macro BS 210 knows the new registered specific neighbour femto BS 200 upon receiving the TR-069 message 211, so that it may update local maintained neighbour femto/macro BS info list by adding the new advertised femto BS and its related capability info 212.

### STEP 7

The neighbour femto/macro BS 210 replies the femto/macro BS management system 202 by a message (Set Parameter Values Response) 213 to confirm the receipt neighbour relation info.

### STEP 8

The femto/macro BS management system 202 updates the local maintained topology and neighbour relation info by adding the new specific femto BS 200 and its related capability info (BS type, CSG service mode, CSG ID/name, supported MS numbers, supported WMF Release Version info, location info) 214.

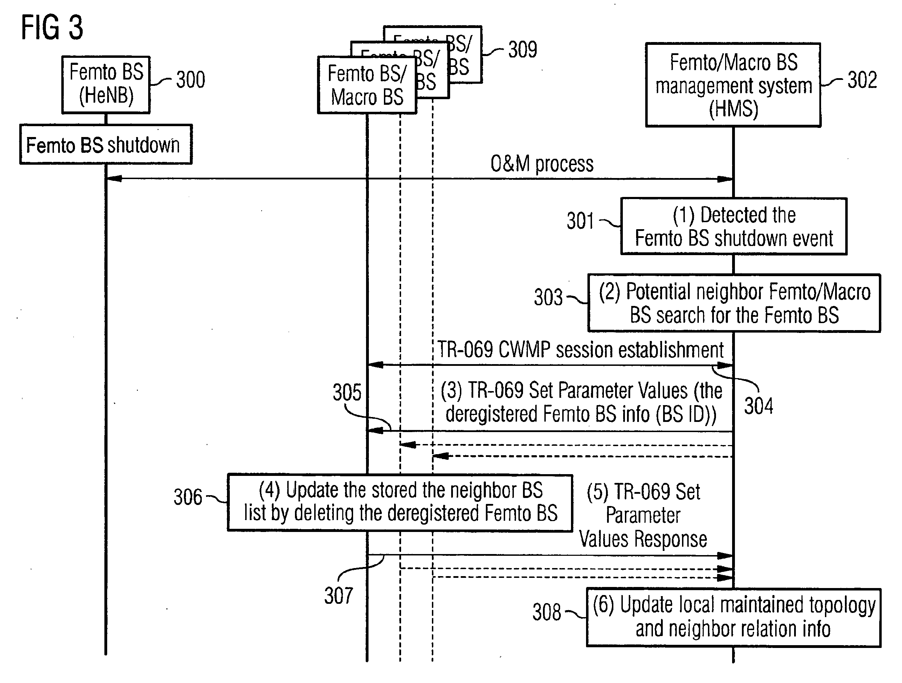

Fig. 3 schematically shows a process of dynamic topology and capability learning upon femto BS 300 deregistration.

### STEP 1

In case a specific femto BS 300 is shutdown or deregistered 301 from the network, a femto/macro BS management system 302 detects the shutdown event 303, and triggers the network topology update process. This detection may be performed by the femto/macro BS management system by any arbitrary process.

### STEP 2

Based on the local maintained neighbour relation and topology info, the femto/macro BS management system selects out 303 the femto/macro BS 309 which may be affected by the disappearing of the femto BS, i.e. the femto/macro BS has neighbour relation with the disappeared specific femto BS 300.

### STEP 3

After a TR-069 CWMP session establishment 304 the femto/macro BS management system sends a message (Set Parameter Values message) 305 to the related neighbour BS/WFAP 309 (selected based on maintained neighbour relation info) to indicate the disappearing of the specific femto BS 300.

### STEP 4

The neighbour femto/macro BS 309 knows the disappearing of the specific femto BS 300 from the received message 305 and may update its local maintained neighbour femto/macro BS list 306 by deleting the specific femto BS 300 and its related capability info.

### STEP 5

The neighbour BS/WFAP 309 replies the femto/macro BS management system 302 by a message (Set Parameter Values Response) 307.

### STEP 6

The femto/macro BS management system 302 updates the local maintained topology info by deleting the specific femto BS 300 and its related info (BS type, CSG service mode, CSG ID/name, supported MS numbers, supported WMF Release Version info), and its neighbour relation info 308.

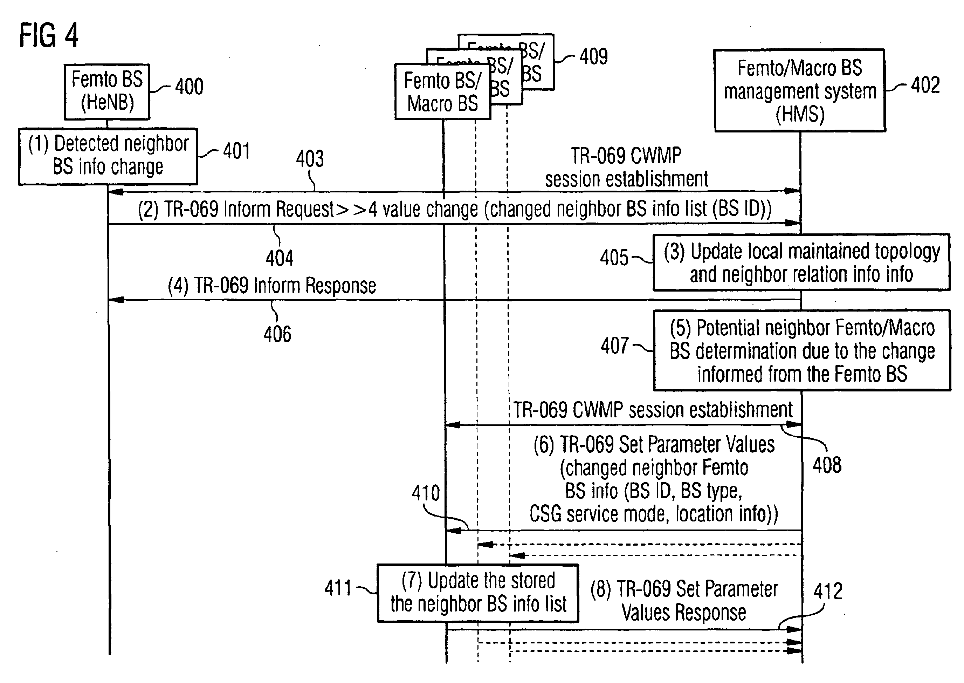

Fig. 4 schematically shows a process of a dynamic topology and capability learning due to capability or topology change.

### STEP 1

A specific femto BS 400 detects a neighbour BS list change 401 due to new neighbour femto/macro BS 409 reported from a femto/macro BS management system 302, or old neighbour BS 309 expired due to no contacting for certain long time period. It should be noted that the neighbour femto/macro BS info maintained by a femto BS may aging with the time. In case the timer is expired, the neighbour femto/macro BS is thought as expired and removed from neighbour list. The timer may be started when the neighbour femto/macro BS info is acquired, and restarted when the HO related communication with the related neighbour femto/macro BS happens.

### STEP 2

After a TR-069 CWMP session establishment 403 the specific femto BS 400 sends a TR-069 message (Inform Request» 4 value change) 404 to femto/macro BS management system 402 to inform its changed neighbour BS list info.

### STEP 3

The femto/macro BS management system updates the local maintained neighbour relation info 405 with the change neighbour list info reported by the specific femto BS 400. It should be noted that the femto/macro BS management system 402 may actively trigger the update process due to capability or subscription change (such as CSG service mode change, CSG ID change) of a femto BS without receiving a trigger message from a specific femto BS 400.

### STEP 4

The femto/macro BS management system 402 replies the specific femto BS 400 by a TR-069 message (Inform response message) 406.

### STEP 5

The femto/macro BS management system 402 selects the neighbour femto/macro BS 409 affected by the neighbour info change 407. The selection may be done by potential neighbour determination mechanism or based on cached neighbour relation info database.

### STEP 6

After a TR-069 CWMP session establishment 408 the femto/macro BS management system 402 sends a TR-069 message (Set Parameter Values) 410 to the related neighbour femto/macro BS 409 affected by the change to inform the new capability and/or neighbour relation info change of the femto BS.

### STEP 7

The femto/macro BS 409 reorganizes the change of the neighbour femto/macro BS from the received topology message, and may update its local maintained neighbour femto/macro BS info list 411.

### STEP 8

The femto/macro BS 409 replies the femto/macro BS management system 402 by a TR-069 message (Set Parameter Values Response) 412.

Summarizing some specific features of a communication network or a communication method according to an exemplary aspect may include that upon registration of a new femto BS, the femto/macro BS management system may send the neighbour info list to the femto BS based on a neighbour relation determination result, and send the new femto BS related info to its related neighbour BSs. Upon the deregistration of a femto BS, the femto/macro BS management system may send the deregistered femto BS to its related neighbour BSs. Upon a capability change (CSG service mode change, CSG ID change, etc), the femto/macro BS management may re-determine the neighbour relationship and inform the change to the related neighbour BSs.

Summarizing some advantages of some exemplary embodiments may be a controlled overall system load and a transparent scalability without ongoing load-related reconfigurations, in particular the operator may not need to worry about the configuration of the performance data retrieval as the system is able to adjust itself to the load conditions. The network equipment vendor may not need to introduce conservative rough limits on the number of supported NEs and allowed number of performance measurements to be monitored per EMS. Furthermore, no scalability related configuration may be required at system installation and upgrade times. Overload conditions may be detected and appropriate measures may be taken to avoid any negative impact on higher priority tasks like the functioning of the network (call processing) itself.

Finally, it should be noted that the above-mentioned embodiments illustrate rather then limit the invention, and that those skilled in the art will be capable of designing many alternative embodiments without departing from the scope of the invention as defined by the appended claims. In the claims, any reference signs shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. In a device claim enumerating several means, several of these means may be embodied by one and the same item of software or hardware. The mere fact that certain measures are recited in mutually different dependent claims does not indicate that a combination of these measures cannot be used to advantage.

### List of reference signs:

- 100: Communication network
- 101: Network cell
- 102: Network cell
- 103: Base station
- 104: Base station
- 105-112: network elements
- 200: Femto BS
- 201: TR-069 CWMP session establishment message
- 202: Femto/macro BS management system
- 203: TR-069 inform request
- 204: TR-069 inform response
- 205: Potential neighbour determination
- 206: TR-069 Set parameter values message
- 207: TR-069 Set parameter response
- 208: Storing neighbour info list
- 209: Neighbouring BSs
- 210: TR-069 CWMP session establishment message
- 211: TR-069 Set parameter values message
- 212: Updating stored neighbour BS list
- 213: TR-069 Set parameter response
- 214: Updating neighbour relation
- 300: Femto BS
- 301: Detect femto BS shutdown
- 302: Femto/macro BS management system
- 303: Potential neighbour search
- 304: TR-069 CWMP session establishment message
- 305: TR-069 Set parameter values message
- 306: Updating stored neighbour BS list
- 307: TR-069 Set parameter value response
- 308: Updating neighbour relation
- 309: Neighbouring BSs
- 400: Femto BS
- 401: Detect neighbour BS info change
- 402: Femto/macro BS management system
- 403: TR-069 CWMP session establishment message
- 404: TR-069 inform request
- 405: Updating neighbour relation
- 406: TR-069 inform response
- 407: Determining potential neighbours
- 408: TR-069 CWMP session establishment message
- 409: Neighbouring BSs
- 410: TR-069 Set parameter values message
- 411: Updating stored neighbour BS list
- 412: TR-069 Set parameter response

## Claims

1. A macro/femto base station management system for a communication network (100) comprising a plurality of network elements (103-112), the macro/femto base station management system comprising:
a receiving means to receive an activity signal indicating that a status of a specific network element has changed,
a determination means to determine a neighbour signal of the specific network element indicative for the neighbourhood relationship of the specific network element, and
a sending means to send the neighbour signal or a modified neighbour signal to at least one neighbouring network element of the specific network element.

2. The macro/femto base station management system according to claim 1,
wherein the activity signal comprises data indicative for the location of the specific network element.

3. The macro/femto base station management system according to claim 1 or 2,
wherein the neighbour signal or a modified neighbour signal comprises list data indicative for a neighbouring list.

4. The macro/femto base station management system according to claim 3, further comprising:
a storing means to store the neighbouring list.

5. The macro/femto base station management system according to any one of the claims 1 to 4,
wherein the neighbour signal or a modified neighbour signal comprises information relating to a handover policy and wherein the handover policy defines handover between the specific network element and the at least one neighbouring network element.

6. The macro/femto base station management system according to anyone of the claim 1 to 5,
wherein the neighbour signal or a modified neighbour signal comprises information relating to at least one characteristic out of the group consisting of:
characteristics of the specific network element,
characteristics of the at least one neighbouring network element, in particular whether the at least one neighbouring network element is a macro base station or a femto base station,
identification of the cell or base station type of the specific network element,
identification of the cell or base station type of the at least one neighbouring network element,
identification of the location info of the at least one neighbouring network element,
indication of a closed subscriber group identification of the specific network element,
indication of a closed subscriber group identification of the at least one neighbouring network element, in particular in case the at least one neighbouring network element is a femto base station,
indication of a closed subscriber group service mode of the at least one neighbouring network element, in particular of an open mode, a closed subscriber group open mode, or a closed subscriber group closed mode, and
indication of a closed subscriber group membership of the at least one neighbouring femto base station.

7. The macro/femto base station management system according to any one of the claims 1 to 6,
wherein the sending means is further sending the neighbour signal to the specific network element.

8. A network element (105- 112) for a communication network, the network element comprising:
a sending means to send an activity signal indicating that a status of the network element has changed,
a receiving means to receive a neighbour signal from a macro/femto base station management system according to any one of the claims 1 to 7, wherein the neighbour signal comprises a neighbour signal of a neighbouring network element indicative of a neighbourhood relationship of the neighbouring network element.

9. The network element according to claim 8, wherein the network element comprises a femto base station or a macro base station.

10. A communication network (100) comprising:
a macro/femto base station management system according to any one of the claims 1 to 7, and
a network element (105-112) according to claim 8 or 9.

11. A method of communication management in a communication network, the method comprising:
receiving an activity signal indicating that a status of a specific network element has changed,
determining a neighbour signal of the specific network element by a macro/femto base station management system which neighbour signal is indicative for the neighbourhood relationship of the specific network element, and
sending the neighbour signal or a modified neighbour signal to at least one neighbouring network element of the specific network element.

12. A method of communication management in a communication network, the method comprising:
sending an activity signal indicating that a status of a network element has changed,
receiving a neighbour signal from a macro/femto base station management system according to any one of the claims 1 to 7,
wherein the neighbour signal comprises a neighbour signal of a neighbouring network element indicative of a neighbourhood relationship of the neighbouring network element.

13. A program element, which, when being executed by a processor, is adapted to control or carry out a method according to claim 11 or 12.

14. A computer-readable medium, in which a computer program is stored which, when being executed by a processor, is adapted to control or carry out a method according claim 11 or 12.

## Patentansprüche

1. Makro-/Femto-Basisstation-Verwaltungssystem für ein Kommunikationsnetzwerk (100), umfassend eine Vielzahl von Netzwerkelementen (103-112), das Makro-/Femto-Basisstation-Verwaltungssystem umfassend:
ein Empfangsmittel zum Empfangen eines Aktivitätssignals, das anzeigt, dass sich ein Status eines spezifischen Netzwerkelements geändert hat,
ein Bestimmungsmittel zum Bestimmen eines Nachbarsignals des spezifischen Netzwerkelements, das die Nachbarschaftsbeziehung des spezifischen Netzwerkelements anzeigt, und
ein Sendemittel zum Senden des Nachbarsignals oder eines modifizierten Nachbarsignals zu mindestens einem benachbarten Netzwerkelement des spezifischen Netzwerkelements.

2. Makro-/Femto-Basisstation-Verwaltungssystem nach Anspruch 1,
wobei das Aktivitätssignal Daten umfasst, die den Ort des spezifischen Netzwerkelements anzeigen.

3. Makro-/Femto-Basisstation-Verwaltungssystem nach Anspruch 1 oder 2,
wobei das Nachbarsignal oder ein modifiziertes Nachbarsignal Listendaten umfasst, die eine benachbarte Liste anzeigen.

4. Makro-/Femto-Basisstation-Verwaltungssystem nach Anspruch 3, ferner umfassend:
ein Speichermittel zum Speichern der benachbarten Liste.

5. Makro-/Femto-Basisstation-Verwaltungssystem nach einem der Ansprüche 1 bis 4,
wobei das Nachbarsignal oder ein modifiziertes Nachbarsignal Informationen umfasst, die zu einer Übergaberegelung in Beziehung stehen, und wobei die Übergaberegelung Übergabe zwischen dem spezifischen Netzwerkelement und dem mindestens einen benachbarten Netzwerkelement definiert.

6. Makro-/Femto-Basisstation-Verwaltungssystem nach einem der Ansprüche 1 bis 5,
wobei das Nachbarsignal oder ein modifiziertes Nachbarsignal Informationen umfasst, die zu mindestens einem Charakteristikum aus einer Gruppe in Beziehung stehen, bestehend aus Folgendem:
Charakteristika des spezifischen Netzwerkelements, Charakteristika des mindestens einen benachbarten Netzwerkelements, insbesondere, ob das mindestens eine benachbarte Netzwerkelement eine Makro-Basisstation oder eine Femto-Basisstation ist,
Identifikation des Zellen- oder Basisstation-Typs des spezifischen Netzwerkelements,
Identifikation des Zellen- oder Basisstation-Typs des mindestens einen benachbarten Netzwerkelements,
Identifikation der Ortsinformationen des mindestens einen benachbarten Netzwerkelements,
Anzeige einer Identifikation einer geschlossenen Teilnehmergruppe des spezifischen Netzwerkelements,
Anzeige einer Identifikation einer geschlossenen Teilnehmergruppe des mindestens einen benachbarten Netzwerkelements, insbesondere in dem Fall, dass das mindestens eine benachbarte Netzwerkelement eine Femto-Basisstation ist,
Anzeige eines Dienstmodus einer geschlossenen Teilnehmergruppe des mindestens einen benachbarten Netzwerkelements, insbesondere eines offenen Modus, eines offenen Modus für die geschlossene Teilnehmergruppe oder
eines geschlossenen Modus für die geschlossene Teilnehmergruppe, und
Anzeige einer Mitgliedschaft einer geschlossenen Teilnehmergruppe der mindestens einen benachbarten Femto-Basisstation.

7. Makro-/Femto-Basisstation-Verwaltungssystem nach einem der Ansprüche 1 bis 6,
wobei das Sendemittel ferner das Nachbarsignal zu dem spezifischen Netzwerkelement sendet.

8. Netzwerkelement (105-112) für ein Kommunikationsnetzwerk, das Netzwerkelement umfassend:
ein Sendemittel zum Senden eines Aktivitätssignals, das anzeigt, dass sich ein Status des Netzwerkelements geändert hat,
ein Empfangsmittel zum Empfangen eines Nachbarsignals von einem Makro-/Femto-Basisstation-Verwaltungssystem nach einem der Ansprüche 1 bis 7,
wobei das Nachbarsignal ein Nachbarsignal eines benachbarten Netzwerkelements umfasst, das eine Nachbarschaftsbeziehung des benachbarten Netzwerkelements anzeigt.

9. Netzwerkelement nach Anspruch 8, wobei das Netzwerkelement eine Femto-Basisstation oder eine Makro-Basisstation umfasst.

10. Kommunikationsnetzwerk (100), umfassend:
ein Makro-/Femto-Basisstation-Verwaltungssystem nach einem der Ansprüche 1 bis 7 und ein Netzwerkelement (105-112) nach Anspruch 8 oder 9.

11. Verfahren der Kommunikationsverwaltung in einem Kommunikationsnetzwerk, das Verfahren umfassend:
Empfangen eines Aktivitätssignals, das anzeigt, dass sich ein Status eines spezifischen Netzwerkelements geändert hat,
Bestimmen eines Nachbarsignals des spezifischen Netzwerkelements durch ein Makro-/Femto-Basisstation-Verwaltungssystem, wobei das Nachbarsignal die Nachbarschaftsbeziehung des spezifischen Netzwerkelements anzeigt , und
Senden des Nachbarsignals oder eines modifizierten Nachbarsignals zu mindestens einem benachbarten Netzwerkelement des spezifischen Netzwerkelements.

12. Verfahren der Kommunikationsverwaltung in einem Kommunikationsnetzwerk, das Verfahren umfassend:
Senden eines Aktivitätssignals, das anzeigt, dass sich ein Status eines Netzwerkelements geändert hat,
Empfangen eines Nachbarsignals von einem Makro-/Femto-Basisstation-Verwaltungssystem nach einem der Ansprüche 1 bis 7,
wobei das Nachbarsignal ein Nachbarsignal eines benachbarten Netzwerkelements umfasst, das eine Nachbarschaftsbeziehung des benachbarten Netzwerkelements anzeigt.

13. Programmelement, das, wenn es von einem Prozessor ausgeführt wird, angepasst ist zum Steuern oder Ausführen eines Verfahrens nach Anspruch 11 oder 12.

14. Computerlesbares Medium, in dem ein Computerprogramm gespeichert ist, das, wenn es von einem Prozessor ausgeführt wird, angepasst ist zum Steuern oder Ausführen eines Verfahrens nach Anspruch 11 oder 12.

## Revendications

1. Un système de gestion de station de base macro/femto pour un réseau de communication (100) comprenant une pluralité d'éléments de réseau (103-112), le système de gestion de station de base macro/femto comprenant :
un moyen de réception destiné à recevoir un signal d'activité indiquant qu'un état d'un élément de réseau spécifique a changé,
un moyen de détermination destiné à déterminer un signal voisin de l'élément de réseau spécifique indicatif de la relation de voisinage de l'élément de réseau spécifique, et
un moyen d'envoi destiné à envoyer le signal voisin ou un signal voisin modifié à au moins un élément de réseau voisin de l'élément de réseau spécifique.

2. Le système de gestion de station de base macro/femto selon la revendication 1,
dans lequel le signal d'activité comprend des données indicatives de l'emplacement de l'élément de réseau spécifique.

3. Le système de gestion de station de base macro/femto selon la revendication 1 ou 2,
dans lequel le signal voisin ou un signal voisin modifié comprend des données de liste indicatives d'une liste voisine.

4. Le système de gestion de station de base macro/femto selon la revendication 3, comprenant en outre :
un moyen de mémoire destiné à conserver en mémoire la liste voisine.

5. Le système de gestion de station de base macro/femto selon l'une quelconque des revendications 1 à 4,
dans lequel le signal voisin ou un signal voisin modifié comprend des informations relatives à une politique de transfert et dans lequel la politique de transfert définit un transfert entre l'élément de réseau spécifique et le au moins un élément de réseau voisin.

6. Le système de gestion de station de base macro/femto selon l'une quelconque des revendications 1 à 5,
dans lequel le signal voisin ou un signal voisin modifié comprend des informations relatives à au moins une caractéristique contenue dans le groupe se composant de :
caractéristiques de l'élément de réseau spécifique,
caractéristiques du au moins un élément de réseau voisin, plus particulièrement si le au moins un élément de réseau voisin est une station de base macro ou une station de base femto,
l'identification de la cellule ou du type de station de base de l'élément de réseau spécifique,
l'identification de la cellule ou du type de station de base du au moins un élément de réseau voisin,
l'identification des informations d'emplacement du au moins un élément de réseau voisin,
l'indication d'une identification de groupe d'abonnés fermé de l'élément de réseau spécifique,
l'indication d'une identification de groupe d'abonnés fermé du au moins un élément de réseau voisin, plus particulièrement dans le cas où le au moins un élément de réseau voisin est une station de base femto,
l'indication d'un mode de service de groupe d'abonnés fermé du au moins un élément de réseau voisin, plus particulièrement d'un mode ouvert, un mode ouvert de groupe d'abonnés fermé, ou un mode fermé de groupe d'abonnés fermé, et
l'indication d'une appartenance à un groupe d'abonnés fermé de la au moins une station de base femto voisine.

7. Le système de gestion de station de base macro/femto selon l'une quelconque des revendications 1 à 6,
dans lequel le moyen d'envoi envoie en outre le signal voisin à l'élément de réseau spécifique.

8. Un élément de réseau (105 - 112) pour un réseau de communication, l'élément de réseau comprenant :
un moyen d'envoi destiné à envoyer un signal d'activité indiquant qu'un état de l'élément de réseau a changé,
un moyen de réception destiné à recevoir un signal voisin provenant d'un système de gestion de station de base macro/femto selon l'une quelconque des revendications 1 à 7, dans lequel le signal voisin comprend un signal voisin d'un élément de réseau voisin indicatif d'une relation de voisinage de l'élément de réseau voisin.

9. L'élément de réseau selon la revendication 8, dans lequel l'élément de réseau comprend une station de base femto ou une station de base macro.

10. Un réseau de communication (100) comprenant :
un système de gestion de station de base macro/femto selon l'une quelconque des revendications 1 à 7, et
un élément de réseau (105-112) selon la revendication 8 ou 9.

11. Un procédé de gestion de communication dans un réseau de communication, le procédé comprenant :
la réception d'un signal d'activité indiquant qu'un état d'un élément de réseau spécifique a changé,
la détermination d'un signal voisin de l'élément de réseau spécifique par un système de gestion de station de base macro/femto, lequel signal voisin est indicatif de la relation de voisinage de l'élément de réseau spécifique, et
l'envoi du signal voisin ou d'un signal voisin modifié à au moins un élément de réseau voisin de l'élément de réseau spécifique.

12. Un procédé de gestion de communication dans un réseau de communication, le procédé comprenant :
l'envoi d'un signal d'activité indiquant qu'un état d'un élément de réseau a changé,
la réception d'un signal voisin d'un système de gestion de station de base macro/femto selon l'une quelconque des revendications 1 à 7,
dans lequel le signal voisin comprend un signal voisin d'un élément de réseau voisin indicatif d'une relation de voisinage de l'élément de réseau voisin.

13. Un élément de programme qui, lorsqu'il est exécuté par un processeur, est adapté de façon à commander ou à exécuter un procédé selon la revendication 11 ou 12.

14. Un support lisible par ordinateur, dans lequel un programme informatique est conservé en mémoire qui, lorsqu'il est exécuté par un processeur, est adapté de façon à commander ou à exécuter un procédé selon la revendication 11 ou 12.
